# EUROPEAN PATENT APPLICATION

(11) **EP 4 834 642 A1**
(43) Date of publication of application: **04.11.2026**
(21) Application number: 25173810.0
(22) Date of filing: 30.04.2025
(51) Int. Cl.: B60L 3/00, B60L 3/12, H01M 10/48, H01M 10/60, H01M 10/635, B60L 58/26, B60L 58/27, H01M 10/613, H01M 10/615, H01M 10/625

(54) **MULTI-STAGE BATTERY CONDITIONING**

(71) Applicant: Ford Global Technologies, LLC, Dearborn, MI 48126 (US)
(72) Inventor: CRISP, Nicholas Dashwood, Benfleet SS7 2RJ (GB); AREVALO, Andres, Upminster RM14 1NN (GB)
(74) Representative: HG Law International LLP

(57) **Abstract**

The present disclosure provides systems and methods for controlling traction battery conditioning. Such systems and methods include providing a traction battery comprising a temperature control arrangement which includes a heat transfer fluid and a circulation arrangement for the heat transfer fluid, determining whether the traction battery of a vehicle is at a predetermined target state of charge, determining whether a battery energy control module has completed required post-drive routines for the traction battery, and determining a maximum energy budget for battery conditioning and a target temperature of the traction battery. Such systems and methods include controlling a battery conditioning operation based on the maximum energy budget, monitoring energy consumption of the battery conditioning operation and ceasing the battery conditioning operation when the maximum energy budget is reached, determining a difference between the current temperature of the traction battery and the target temperature of the traction battery, determining a control strategy for the temperature control arrangement, wherein the control strategy includes setting a temperature for the heat transfer fluid, and executing the control strategy for the temperature control arrangement by controlling the temperature the flow of the heat transfer fluid by the circulation arrangement, such that the traction battery achieves the target temperature.

## Description

### FIELD OF INVENTION

The present disclosure relates to battery thermal management systems for electric and electrified vehicles, and more particularly to a multi-stage battery thermal conditioning system that optimizes energy efficiency during charging events using a dual temperature control loop.

### BACKGROUND

Electrified vehicles and electric vehicles (EVs) have gained significant popularity in recent years as an alternative to traditional internal combustion engine vehicles. A key component of such vehicles is the traction battery, which provides the electrical energy necessary for propulsion. The performance and longevity of these batteries are influenced by their operating temperature.

Traction batteries in such vehicles typically operate most efficiently within a specific temperature range. When the ambient temperature falls outside this range, particularly in cold climates, battery performance can be adversely affected. Cold temperatures can lead to reduced energy capacity, decreased power output, and slower charging rates. Conversely, excessively high temperatures may give rise to battery degradation.

To address these temperature-related challenges, electric and electrified vehicles are equipped with battery thermal management systems. These systems aim to maintain the battery temperature within an optimal range, regardless of ambient conditions. Common approaches include the use of liquid coolant circulation, electric heaters, and heat pumps to either warm up or cool down the battery as needed.

However, current battery thermal management systems face several challenges. One issue is the energy efficiency of the conditioning process. Heating or cooling the battery requires energy, which can reduce the overall range of the vehicle if not managed.

Another challenge is the occurrence of temperature gradients within the battery pack. It is desirable to provide even heating and/or cooling to aid consistent performance across different cells within the battery. Additionally, it is desirable to mitigate rapid temperature changes in the battery so as to not thermally stress on battery components.

Furthermore, existing systems often struggle to balance the need for rapid temperature adjustment with energy efficiency. Systems that prioritize quick temperature changes may consume excessive energy, while more conservative approaches may not adequately prepare the battery for optimal performance in a timely manner.

### SUMMARY

This Summary is provided to introduce a selection of concepts in a simplified form that are further described below in the Detailed Description.

In a first aspect, a method for controlling traction battery conditioning is provided. The method comprises: providing a traction battery comprising a temperature control arrangement which includes a heat transfer fluid and a circulation arrangement for the heat transfer fluid; determining whether the traction battery of a vehicle is at a predetermined target state of charge; determining whether a battery energy control module has completed required post-drive routines for the traction battery; determining a maximum energy budget for battery conditioning and a target temperature of the traction battery; controlling a battery conditioning operation based on the maximum energy budget; monitoring energy consumption of the battery conditioning operation and ceasing the battery conditioning operation when the maximum energy budget is reached; determining a difference between the current temperature of the traction battery and the target temperature of the traction battery; determining a control strategy for the temperature control arrangement, wherein the control strategy includes setting a temperature for the heat transfer fluid; and executing the control strategy for the temperature control arrangement by controlling the temperature the flow of the heat transfer fluid by the circulation arrangement, such that the traction battery achieves the target temperature.

This method provides an efficient and energy-optimized approach to traction battery conditioning, ensuring that the battery reaches its target temperature while adhering to a predetermined energy budget. By monitoring and controlling the energy consumption, the method may optimize energy use during the conditioning process.

The maximum energy budget may be based upon the difference between the target temperature and an ambient temperature.

Basing the maximum energy budget on the temperature difference allows for a more precise and adaptive conditioning process, taking into account the specific environmental conditions and energy availability.

The maximum energy budget may be further based on the specific heat capacity of the traction battery.

Considering the specific heat capacity of the traction battery in the energy budget calculation may enable a more accurate estimation of the energy required for conditioning, leading to increased.

The conditioning of the traction battery may be heating.

Heating the traction battery when necessary can optimize its performance and efficiency, particularly in cold environments.

The conditioning of the traction battery may be cooling.

Cooling the traction battery when required can prevent overheating, thus maintaining optimal battery conditions and potentially extending its lifespan.

The circulation arrangement may include at least one pump.

Utilizing a pump in the circulation arrangement enables precise control over the flow of the heat transfer fluid, allowing for more efficient and effective temperature control of the traction battery.

The circulation arrangement may include at least one actuator for controlling the at least one pump.

The inclusion of an actuator for pump control provides finer adjustment of the heat transfer fluid flow, enabling more responsive and accurate temperature management of the traction battery.

The temperature control arrangement may include a feedback-based control arrangement.

A feedback-based control arrangement allows for continuous monitoring and adjustment of the temperature control process, ensuring that the target temperature is maintained accurately and efficiently.

The feedback-based control arrangement may be a proportional-integral-derivative controller.

Utilizing a proportional-integral-derivative controller provides sophisticated and precise control over the temperature control process, potentially optimizing the speed and accuracy of reaching and maintaining the target temperature.

The heat transfer fluid may comprise a liquid coolant.

Using a liquid coolant as the heat transfer fluid can provide efficient heat transfer capabilities, allowing for more effective temperature control of the traction battery.

The method may further comprise: determining an elapsed time for the execution of the control strategy for the temperature control arrangement; determining whether a time threshold has been reached; and on determining that the time threshold has been reached, ceasing the execution of the control strategy for the temperature control arrangement.

This time-based control feature prevents excessive energy consumption by limiting the duration of the conditioning process, ensuring that the system does not continue to operate unnecessarily.

The method may further comprise determining whether the electric vehicle is configured to be conditioned for a scheduled departure, and on determining that the electric vehicle is configured to be configured for a scheduled departure, ceasing the execution of the control strategy for the temperature control arrangement.

This feature allows for intelligent management of the conditioning process based on the vehicle's scheduled use, potentially saving energy through not conditioning the battery when the vehicle is not expected to be used.

The method may further comprise: determining whether the vehicle is connected to an electric vehicle supply equipment, and on determining that the vehicle has been unplugged from the electric vehicle supply equipment, ceasing the execution of the control strategy for the temperature control arrangement.

This capability ensures that the conditioning process is only carried out when the vehicle is connected to a power source, preventing unnecessary battery drain and preserving the vehicle's range.

In a second aspect, a system for traction battery conditioning configured to carry out the method steps of the first aspect is provided.

This system implementation allows for the practical application of the traction battery conditioning method, providing a complete solution for vehicle manufacturers and users.

In a third aspect, a vehicle comprising the system for traction battery conditioning of the second aspect is provided.

Integrating the traction battery conditioning system into a vehicle enables direct implementation of the energy-efficient conditioning process.

### BRIEF DESCRIPTION OF FIGURES

Non-limiting and non-exhaustive examples are described with reference to the following figures.
FIG. 1 illustrates an exemplary process flow in accordance with the systems and methods described herein;
FIG. 2 illustrates an exemplary process flow for control in accordance with the systems and methods described herein;
FIG. 3 illustrates an exemplary process flow for control in accordance with the systems and methods described herein;
FIG. 4 illustrates an exemplary process flow for control in accordance with the systems and methods described herein;
FIG. 5 illustrates an exemplary process flow in accordance with the systems and methods described herein;
FIG. 6 illustrates an exemplary process flow in accordance with the systems and method described herein; and
FIG. 7 illustrates a vehicle which incorporates the systems and methods described herein.

Common reference numerals are used throughout the figures to indicate similar features.

### DETAILED DESCRIPTION

The present disclosure relates to a multi-stage battery thermal conditioning system for electric vehicles and/or electrified vehicles. An electrified vehicle may be taken to mean a vehicle fitted with a high voltage ('HV') battery which operates at or above 60V DC, and includes charging capability. Such an electrified vehicle may, for example, be a hydrogen fuel cell vehicle, a plug-in hybrid vehicle, and/or a range extender equipped vehicle.

The system described herein may employ a dual temperature control loop approach to manage battery temperature during charging events. This approach allows for efficient battery warm-up and temperature maintenance without requiring a programmed departure time.

The system may adapt its operation based on various factors, including whether the vehicle is connected to an electric vehicle supply equipment. Additionally, the system can respond to user-defined departure times when such information is provided.

A customizable user interface menu may be included, allowing users to select preferences that balance energy conservation and performance. This feature provides flexibility for users to tailor the system's operation according to their specific needs and priorities.

The dual temperature control loop comprises two main components. A first loop is designed for rapid battery warm-up to reach a target temperature. A second loop functions to maintain the desired temperature while the vehicle remains connected to the charging equipment. This approach aims to optimize energy usage and minimize thermal gradients across battery cells.

By employing this multi-stage approach, the system seeks to promote energy efficiency in battery thermal management while ensuring consistent battery performance and reducing battery stress.

The traction battery of an electric vehicle or electrified vehicle may include a temperature control arrangement. The temperature control arrangement may include a heat transfer fluid and a circulation arrangement for the heat transfer fluid. The heat transfer fluid may comprise a liquid coolant, such as a water-glycol mixture or other suitable coolant formulation.

The circulation arrangement may include at least one pump for circulating the heat transfer fluid through the traction battery and associated components. The circulation arrangement may also include at least one actuator for controlling the pump. The actuator may be an electric motor or other suitable device capable of adjusting the pump's operation to control fluid flow.

A feedback-based control arrangement may be incorporated into the temperature control arrangement. This feedback-based control arrangement may monitor various parameters such as battery temperature, coolant temperature, and ambient temperature to adjust the operation of the circulation arrangement. In some examples, the feedback-based control arrangement may be a proportional-integral-derivative (PID) controller. The PID controller may continuously calculate an error value as the difference between a desired setpoint and a measured process variable, and apply a correction based on proportional, integral, and derivative terms.

The temperature control arrangement may allow for precise management of the traction battery's temperature. By circulating the heat transfer fluid and adjusting its flow and temperature based on feedback from various sensors, the system can maintain the traction battery within an optimal temperature range. This temperature management may help to maximize battery performance, longevity, and efficiency across various operating conditions.

The multi-stage battery conditioning system provides an energy-efficient approach to managing the temperature of traction batteries in electric or electrified vehicles. This system incorporates adaptive control features and multiple stages of operation to optimize battery performance while minimizing energy consumption.

In some cases, the system may reduce energy consumption by approximately 25% compared to conventional battery conditioning methods. This reduction in energy usage may be achieved through precise temperature control and minimization of thermal gradients across the battery cells.

The system may include a temperature control arrangement comprising a heat transfer fluid and a circulation arrangement. In some implementations, the circulation arrangement may include one or more pumps and actuators to control the flow and temperature of the heat transfer fluid.

A key feature of the system may be its ability to adapt its operation based on various factors such as the vehicle's connection status to an electric vehicle supply equipment, ambient temperature, and user-defined parameters. The system may determine a maximum energy budget for battery conditioning and a target temperature for the traction battery, then control the conditioning operation accordingly.

In some cases, the system may include a user interface that allows for customization of the energy draw and system operation. This interface may enable users to select different levels of conditioning intensity, balancing between energy conservation and desired battery performance.

The multi-stage approach of the system may involve several steps, including:
1. Verifying the state of charge of the traction battery
2. Completing any required post-drive routines
3. Determining and executing a control strategy for the temperature control arrangement
4. Monitoring and adjusting the conditioning process based on energy consumption and temperature differentials

Throughout these stages, the system may continuously monitor and adjust its operation to maintain optimal battery temperature while staying within the determined energy budget. This adaptive control may help to ensure consistent battery performance and potentially extend battery life by reducing thermal stress.

In some implementations, the system may also incorporate features such as scheduled departure times and automatic cessation of conditioning operations when certain thresholds are met or when the vehicle is unplugged from the charging equipment.

By combining these various features and control strategies, the multi-stage battery conditioning system may provide an efficient and flexible solution for managing traction battery temperature in electric or electrified vehicles across a range of operating conditions and user preferences.

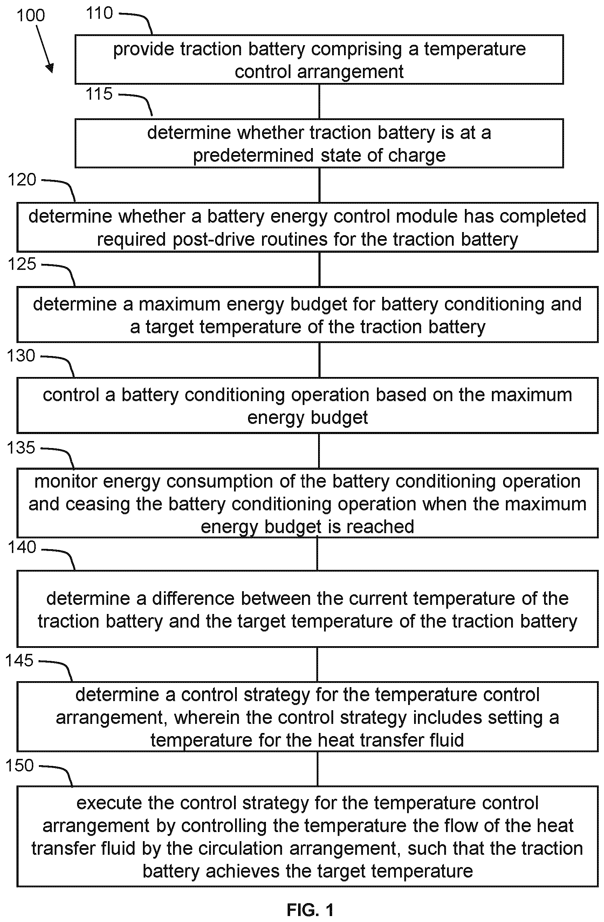

FIG. 1 illustrates a flowchart of a method 100 for controlling traction battery conditioning. The method 100 may include multiple steps for managing the temperature and energy consumption of a traction battery in an electric or electrified vehicle.

The method 100 may begin with step 110, which involves providing a traction battery that includes a temperature control arrangement. In some cases, the temperature control arrangement may comprise a heat transfer fluid and a circulation arrangement for the heat transfer fluid. The circulation arrangement may be responsible for moving the heat transfer fluid throughout the battery system to control temperature.

At step 115, the method 100 may determine whether the traction battery is at a predetermined target state of charge. This step may ensure that the battery has sufficient charge before proceeding with conditioning operations.

Following this, step 120 of the method 100 may involve determining whether a battery energy control module has completed required post-drive routines for the traction battery. These routines may include various diagnostic or maintenance procedures that need to be performed after vehicle operation.

In step 125, the method 100 may determine a maximum energy budget for battery conditioning and a target temperature of the traction battery. The maximum energy budget may be based on the difference between the target temperature and the ambient temperature. In some cases, the maximum energy budget may be further based on the specific heat capacity of the traction battery.

Step 130 of the method 100 may involve controlling a battery conditioning operation based on the maximum energy budget determined in step 125. The conditioning of the traction battery may involve heating in some cases.

During the conditioning process, step 135 of the method 100 may include monitoring energy consumption of the battery conditioning operation. The method 100 may cease the battery conditioning operation when the maximum energy budget is reached, ensuring that energy usage remains within predetermined limits.

At step 140, the method 100 may determine a difference between the current temperature of the traction battery and the target temperature of the traction battery. This temperature differential may be used to inform subsequent control decisions.

Step 145 of the method 100 may involve determining a control strategy for the temperature control arrangement. In some cases, this control strategy may include setting a temperature for the heat transfer fluid. The heat transfer fluid may comprise a liquid coolant in some implementations.

Finally, at step 150, the method 100 may execute the control strategy for the temperature control arrangement. This may involve controlling the temperature and flow of the heat transfer fluid by the circulation arrangement, with the goal of bringing the traction battery to the target temperature.

By following these steps, the method 100 may provide a systematic approach to controlling traction battery conditioning, balancing energy efficiency with optimal battery temperature management.

The battery energy control module manages various aspects of the traction battery's operation and performance. A primary function of the battery energy control module is to determine whether the traction battery has reached a predetermined target state of charge. This determination may involve monitoring the voltage, current, and temperature of the battery cells to calculate an accurate state of charge.

The battery energy control module also performs and completes required post-drive routines for the traction battery. These routines may include various processes to optimize battery health, performance, and longevity. For example, one post-drive routine may involve cell balancing, where the module equalizes the charge levels across individual cells to prevent overcharging or undercharging of specific cells. Another routine may include capacity estimation, where the module assesses the overall capacity of the battery pack based on recent usage data.

Additional post-drive routines may include thermal management processes, where the module analyses temperature data from the most recent drive cycle to determine if any cooling or heating actions are necessary. The battery energy control module may also perform diagnostic checks to identify any potential issues or anomalies in battery performance.

In some examples, the battery energy control module may execute an adaptive learning algorithm as part of its post-drive routines. This algorithm may analyse patterns in battery usage, charging behaviour, and environmental conditions to optimize charging strategies and optimize overall battery efficiency.

The completion of these post-drive routines by the battery energy control module ensures that the traction battery is in an optimal state for the next use cycle or for any subsequent conditioning operations. By managing these processes, the battery energy control module plays a crucial role in maintaining the health and performance of the traction battery over its lifetime.

The method for controlling traction battery conditioning involves determining a maximum energy budget for battery conditioning and a target temperature of the traction battery. The maximum energy budget may be based on the difference between the target temperature and an ambient temperature. In some examples, the maximum energy budget is further based on the specific heat capacity of the traction battery.

When determining the target temperature, the system may aim for 0 degrees Celsius at all times when the vehicle is connected to an electric vehicle supply equipment, irrespective of ambient temperature below zero. This approach helps maintain optimal battery performance in cold conditions.

The calculation of the maximum energy budget takes into account various factors to ensure efficient use of energy while achieving the desired battery temperature. By considering the difference between the target temperature and the ambient temperature, the system can estimate the amount of energy required to heat or cool the battery to the desired level. The inclusion of the traction battery's specific heat capacity in the calculation allows for a more accurate estimation of the energy needed to change the battery's temperature.

In scenarios where a departure time is set by the user, the system may adjust its target temperature. For instance, the system can warm the battery to 15 degrees Celsius, which provides performance benefits almost equivalent to warming to 25 degrees Celsius, while consuming less energy. This approach balances energy efficiency with battery performance, ensuring the vehicle is ready for use while minimizing unnecessary energy consumption.

By carefully determining the maximum energy budget and target temperature based on these factors, the system can optimize the battery conditioning process, ensuring efficient use of energy while maintaining the traction battery at an appropriate temperature for optimal performance and longevity.

The first control loop of the battery thermal conditioning system is responsible for rapid battery warm-up. This control loop monitors energy consumption and controls the conditioning operation based on a predetermined maximum energy budget.

The system determines the difference between the current temperature of the traction battery and the target temperature. This temperature difference, along with other factors such as ambient temperature and the specific heat capacity of the traction battery, may be used to calculate the maximum energy budget for the conditioning operation.

During the rapid warm-up phase, the system continuously monitors the energy consumption of the battery conditioning operation. The conditioning operation may involve heating the traction battery using various methods, such as circulating heated coolant through the battery pack or activating electric heating elements.

The control loop controls the conditioning operation to ensure efficient use of the available energy budget. For example, in cold ambient conditions where a significant temperature increase is required, the system may initially apply maximum heating power to rapidly raise the battery temperature. As the battery temperature approaches the target, the system may modulate the heating power so as not to overshoot and to conserve energy.

In scenarios where the ambient temperature is closer to the target temperature, the system may apply a more gradual heating approach to minimize energy consumption while still achieving the desired battery temperature.

The system ceases the battery conditioning operation when the maximum energy budget is reached, even if the target temperature has not been fully achieved. This approach ensures that energy consumption remains within predetermined limits, which may be beneficial for overall vehicle efficiency and to reduce drain on the vehicle's power source.

For instance, if the traction battery temperature starts at -10°C and the target temperature is 0°C, the system may allocate a specific energy budget for this temperature increase. The first control loop will monitor the energy used for heating and adjust the heating rate to maximize temperature gain within the allocated budget. If the budget is exhausted before reaching 0°C, the system will stop the heating process, having achieved the maximum possible temperature increase within the energy constraints.

This control strategy allows for efficient use of available energy while still providing optimizations in battery temperature and performance. By carefully managing the energy allocation for battery conditioning, the system can balance the need for optimal battery temperature with overall energy efficiency considerations.

The second control loop of the battery thermal conditioning system is responsible for maintaining the traction battery at the desired temperature once the initial warm-up phase is complete. This control loop operates by determining a control strategy for the temperature control arrangement and executing that strategy to control the temperature and flow of the heat transfer fluid.

When determining the control strategy, the system takes into account various factors such as the current battery temperature, the target temperature, and the ambient temperature. Based on these inputs, the system sets a target temperature for the heat transfer fluid that will maintain the traction battery at the desired temperature.

The control strategy may involve adjusting the temperature of the heat transfer fluid as well as controlling its flow rate through the circulation arrangement. For example, if the battery temperature begins to drop below the target, the system may increase the temperature of the heat transfer fluid or increase its flow rate to provide more heat to the battery. Conversely, if the battery temperature rises above the target, the system may decrease the fluid temperature or reduce its flow rate.

In some examples, the temperature control arrangement may include a feedback-based control arrangement to execute the control strategy. A proportional-integral-derivative (PID) controller may be used to continuously monitor the battery temperature and adjust the heat transfer fluid parameters accordingly. The PID controller calculates an error value as the difference between the desired battery temperature and the actual measured temperature, then applies a correction based on proportional, integral, and derivative terms.

The system may also operate in reverse to cool the battery when necessary. In cooling scenarios, the control strategy may involve circulating cooler heat transfer fluid through the battery or activating additional cooling systems such as radiators or refrigeration units.

In situations where the vehicle is not connected to an electric vehicle supply equipment (off-plug operation), the system may employ a less energy-intense process. For off-plug scenarios, the control strategy may maintain a higher target temperature for the battery to conserve energy. For example, instead of maintaining the battery at 0°C, the system may target a temperature of -10°C. While this higher temperature may result in slightly reduced performance compared to 0°C, it allows for more efficient energy use from the vehicle's own battery, balancing performance needs with energy conservation.

The second control loop continues to operate and maintain the battery temperature until certain conditions are met, such as the vehicle being unplugged from the charging equipment, a user-defined departure time being reached, or a maximum operation time being exceeded.

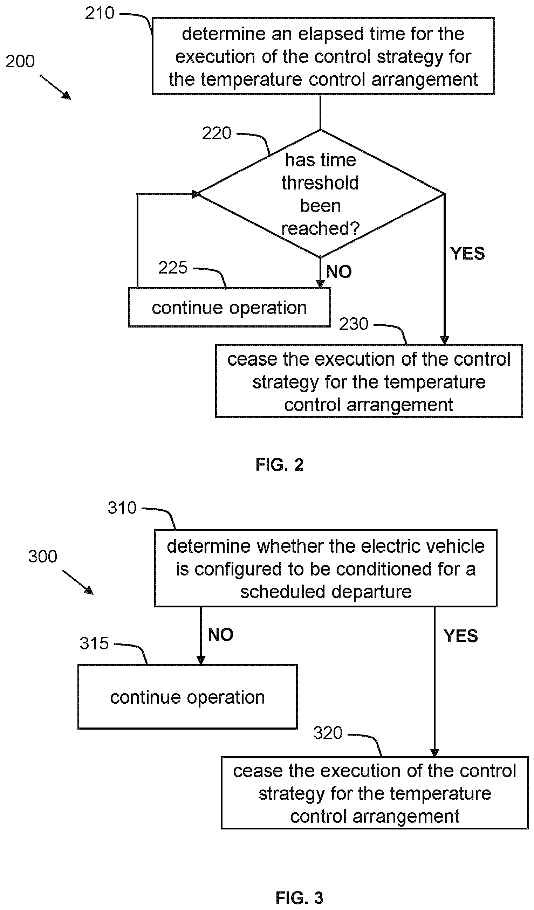

FIG. 2 and FIG. 3 illustrate flowcharts of methods for controlling the execution time of a temperature control strategy and responding to scheduled departures in the battery conditioning system.

FIG. 2 shows a method 200 for controlling the execution time of a temperature control strategy. The method 200 may begin with step 210, where an elapsed time for the execution of the control strategy for the temperature control arrangement is determined. This step may involve tracking the duration of the battery conditioning process to ensure it does not continue indefinitely.

Following step 210, the method 200 may proceed to step 220. At step 220, a determination may be made whether a time threshold has been reached. The time threshold may be a predetermined duration beyond which the battery conditioning process should not continue, helping to prevent excessive energy consumption or potential battery stress.

If the time threshold has not been reached, the method 200 may move to step 225, where operation of the temperature control strategy continues. This may allow the battery conditioning process to proceed as long as the time threshold has not been exceeded.

However, if the time threshold has been reached, the method 200 may proceed to step 230. At step 230, the execution of the control strategy for the temperature control arrangement may cease. This step may help prevent the battery conditioning process from continuing indefinitely, which could lead to unnecessary energy consumption or potential battery wear.

FIG. 3 illustrates a method 300 for controlling temperature based on scheduled departure. The method 300 may begin with step 310, where a determination is made whether the electric or electrified vehicle is configured to be conditioned for a scheduled departure. This step may involve checking if the user has set a specific time for their next intended use of the vehicle.

If the determination at step 310 is negative, indicating that no scheduled departure has been set, the method 300 may proceed to step 315. At step 315, operation of the temperature control strategy may continue as normal, without adjusting for a specific departure time.

However, if the determination at step 310 is positive, indicating that the vehicle is configured for a scheduled departure, the method 300 may move to step 320. At step 320, the execution of the control strategy for the temperature control arrangement may cease. This step may help optimize energy usage without unnecessary battery conditioning when a specific departure time is known.

In some cases, the methods 200 and 300 may work in conjunction to provide efficient battery conditioning while respecting both time limits and user-defined schedules. The timer functionality in method 200 may prevent the battery conditioning process from continuing indefinitely, while the scheduled departure check in method 300 may allow the system to adapt its operation based on the user's planned vehicle usage.

By implementing these methods, the battery conditioning system may balance the need for optimal battery temperature with energy efficiency and user convenience. The system may cease operations when time thresholds are reached or when conditioning is not required due to a scheduled departure time.

The multi-stage battery thermal conditioning system integrates various components and processes to efficiently manage the temperature of the traction battery in an electric or electrified vehicle. The system operates through a series of checks and control loops to ensure optimal battery conditioning while conserving energy.

Upon activation, the system first determines whether the vehicle is connected to an electric vehicle supply equipment. This check is crucial as it influences the available energy for conditioning and the target temperature range. If the vehicle is connected, the system may have access to external power for conditioning, allowing for more extensive temperature management.

The system also checks whether the vehicle is configured for a scheduled departure. If a scheduled departure time is set, the system adjusts its operation to ensure the battery reaches optimal temperature by the departure time while minimizing energy consumption. For example, if the scheduled departure is several hours away, the system may delay the start of intensive conditioning.

Once these initial checks are complete, the system begins the conditioning process. The first control loop rapidly warms up or cools down the battery to approach the target temperature. During this phase, the system monitors the energy consumption and compares it to the predetermined maximum energy budget. If the energy budget is exhausted before reaching the target temperature, the system ceases the conditioning operation to prevent excessive energy use.

After the initial conditioning phase, the second control loop maintains the battery temperature within the desired range. This maintenance phase continues until certain conditions are met, such as reaching a time threshold or the vehicle being unplugged from the supply equipment.

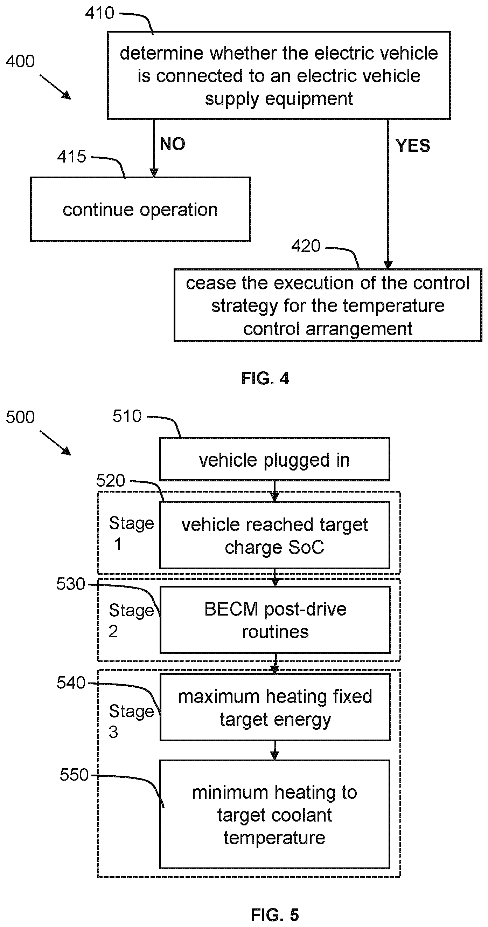

FIG. 4 and FIG. 5 illustrate flowcharts of methods for controlling battery conditioning operations and stages in an electric or electrified vehicle.

FIG. 4 shows a method 400 for controlling battery conditioning operations based on the vehicle's connection status to an electric vehicle supply equipment (EVSE). The method 400 may begin with step 410, where a determination may be made whether the electric or electrified vehicle is connected to an EVSE. This step may involve checking the connection status of the vehicle to determine if it is plugged in and receiving power from an external source.

If the determination at step 410 is negative, indicating that the vehicle is not connected to an EVSE, the method 400 may proceed to step 415. At step 415, the battery conditioning operation may continue, potentially using a different strategy optimized for off-plug scenarios. In some cases, this may involve adjusting the target temperature or energy budget to conserve the vehicle's battery power.

However, if the determination at step 410 is positive, indicating that the vehicle is connected to an EVSE, the method 400 may proceed to step 420. At step 420, the execution of the control strategy for the temperature control arrangement may continue, potentially using a strategy optimized for on-plug scenarios. In some cases, this may involve setting a higher target temperature or allowing for a larger energy budget due to the availability of external power.

FIG. 5 illustrates a method 500 for battery conditioning stages. The method 500 may begin with step 510, which may involve vehicle plugged-in status verification. This step may be similar to step 410 in method 400, ensuring that the vehicle is connected to an EVSE before proceeding with the full conditioning process.

Following the plugged-in status verification, the method 500 may include multiple stages of battery management and conditioning. A first stage may comprise step 520, where a determination may be made whether the vehicle has reached a target charge state of charge (SoC). This step may ensure that the battery has sufficient charge before proceeding with further conditioning operations.

A second stage of the method 500 may include step 530, where battery energy control module (BECM) post-drive routines may be performed. These routines may involve various diagnostic or maintenance procedures that need to be executed after vehicle operation and before conditioning.

A third stage of the method 500 may include step 540, where a maximum heating fixed target energy may be determined. This step may involve calculating the energy budget for the conditioning process based on factors such as the current battery temperature, target temperature, and available power from the EVSE.

The method 500 may then proceed to step 550, which may involve minimum heating to a target coolant temperature. This step may represent the actual conditioning process, where the temperature control arrangement may be used to bring the battery to the desired temperature while staying within the determined energy budget.

In some cases, the methods 400 and 500 may work together to provide a comprehensive approach to battery conditioning. The connection status check in method 400 may determine the overall strategy, while method 500 may provide a more detailed process for executing the conditioning when the vehicle is plugged in.

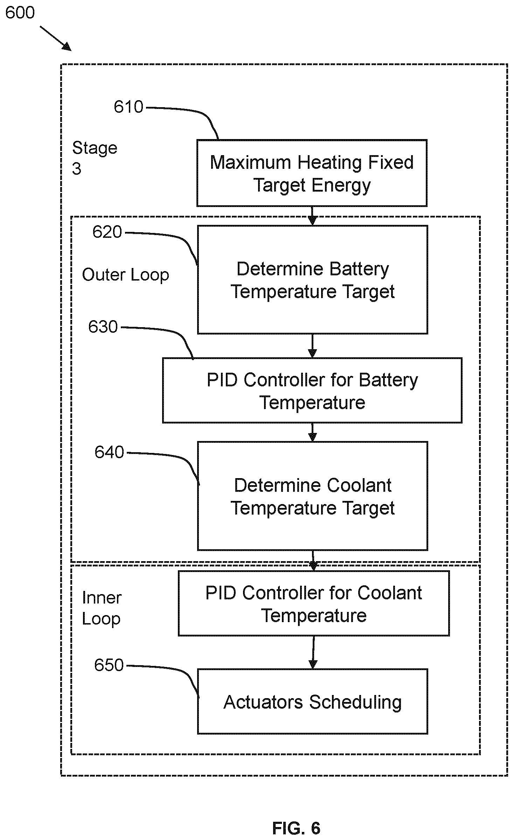

FIG. 6 illustrates a flowchart of a method 600 for battery thermal management with nested control loops. The method 600 may include multiple stages and control loops for managing the temperature of a traction battery in an electric or electrified vehicle.

The method 600 may begin with step 610, where a maximum heating fixed target energy may be determined. This step may establish an energy budget for the battery conditioning process.

Following step 610, the method 600 may include an outer loop containing steps 620-640. The outer loop may be responsible for setting overall temperature targets and strategies for the battery thermal management system.

Within the outer loop, step 620 may determine a battery temperature target. This target may be based on various factors such as the current battery temperature, ambient temperature, and desired operating conditions.

Step 630 may implement a feedback-based control arrangement for battery temperature control. In some cases, this feedback-based control arrangement may be a proportional-integral-derivative (PID) controller. The PID controller may continuously adjust the control parameters based on the difference between the actual battery temperature and the target temperature.

Step 640 may determine a coolant temperature target based on the battery temperature control parameters established in the previous steps. The method 600 may include monitoring external temperature and adjusting the coolant temperature target accordingly. This adaptive approach may help optimize the thermal management process under varying environmental conditions.

The method 600 may also include an inner loop containing step 650. The inner loop may receive input from the outer loop's coolant temperature target determination and implement actuator scheduling to control the thermal management hardware.

In some cases, the inner loop may control a circulation arrangement that includes at least one pump. The circulation arrangement may also include at least one actuator for controlling the pump. These components may work together to circulate a heat transfer fluid through the battery system, controlling its temperature.

The step 650 may involve using a heat pump or positive temperature coefficient (PTC) heater to heat the coolant. In some implementations, the method 600 may include preventing the coolant temperature from falling below 5 degrees Celsius to maintain optimal battery performance.

The nested control loop structure of method 600 may allow for precise and efficient thermal management. The outer loop may set overall strategies and targets, while the inner loop may handle the specific actuator control to achieve those targets. This approach may help balance the need for accurate temperature control with energy efficiency.

In some cases, the method 600 may be applied in reverse to cool the battery. This flexibility may allow the system to maintain optimal battery temperature across a wide range of operating conditions.

By implementing these nested control loops and adaptive strategies, the method 600 may provide a comprehensive approach to battery thermal management in electric or electrified vehicles. The system may continuously adjust its operation based on current conditions and targets, potentially optimizing energy usage while maintaining desired battery temperature.

By implementing these methods, the battery conditioning system may adapt its operation based on the vehicle's connection status and progress through multiple stages of battery management. This approach may allow for efficient use of energy and optimal battery conditioning under various scenarios.

The system determines the elapsed time for the execution of the control strategy for the temperature control arrangement. This time tracking is essential to prevent indefinite operation of the conditioning system, which could lead to unnecessary energy consumption or potential battery stress.

A time threshold is set to limit the duration of the conditioning process. The system continuously checks whether this time threshold has been reached. Upon determining that the time threshold has been reached, the system ceases the execution of the control strategy for the temperature control arrangement. This feature ensures that the conditioning process does not continue indefinitely, which may be particularly useful in scenarios where the vehicle is left unattended for extended periods, such as during vacations.

Throughout the conditioning process, the system periodically checks whether the vehicle remains connected to the electric vehicle supply equipment. If the system determines that the vehicle has been unplugged from the supply equipment, it immediately ceases the execution of the control strategy. This ensures that the conditioning process does not drain the vehicle's battery when external power is no longer available.

In scenarios where the vehicle is configured for a scheduled departure, the system operates differently. It may condition the battery to a lower temperature target or not operate at all, depending on the time remaining until departure and the current battery temperature. This approach balances the need for optimal battery temperature at departure with energy conservation.

For example, if a user sets a departure time for 7:00 AM the following day, the system may allow the battery to cool to ambient temperature overnight instead of maintaining a constant elevated temperature. The system then initiates a single heating cycle closer to the departure time, bringing the battery to the optimal temperature just before the vehicle is needed. This strategy may aid in energy efficiency when maintaining an elevated battery temperature when the vehicle is not in use.

In off-plug scenarios, where the vehicle is not connected to a power supply, the system may employ a less energy-intensive process. For instance, if the ambient temperature is -10°C, the system may aim to maintain the battery at -10°C rather than trying to heat it to 0°C. While this may result in slightly reduced performance compared to a fully warmed battery, it strikes a balance between maintaining some level of battery conditioning and conserving the vehicle's stored energy.

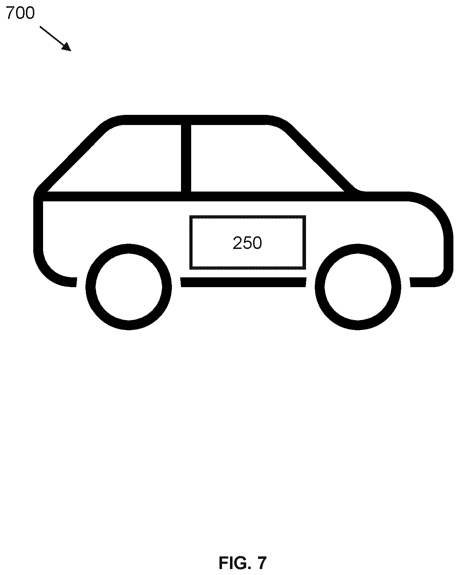

FIG. 7 illustrates a simplified side view of a vehicle 700. The vehicle 700 may include a battery pack 250 positioned within the vehicle's structure. In some cases, the battery pack 250 may be located in a central position of the vehicle 700, though the specific placement may vary depending on the vehicle design.

The integration of the battery pack 250 within the vehicle 700 may have implications for various aspects of vehicle design and performance. In some cases, the positioning of the battery pack 250 may affect the vehicle's center of gravity. A lower center of gravity may be achieved by placing the battery pack 250 in a low position within the vehicle 700.

The location of the battery pack 250 may also influence the vehicle's weight distribution. In some cases, a centrally positioned battery pack 250 may contribute to a more balanced weight distribution between the front and rear of the vehicle 700. This balance may have implications for vehicle dynamics and performance characteristics.

In some cases, the battery pack 250 may be incorporated as a structural element of the vehicle 700, potentially contributing to the overall rigidity of the vehicle body.

The positioning of the battery pack 250 may also affect the interior space and cargo capacity of the vehicle 700. In some cases, a floor-mounted battery pack 250 may result in a raised floor height in the passenger compartment. The location of the battery pack 250 may also influence the design of other vehicle systems, such as cooling systems and electrical connections.

By integrating these various checks, controls, and adaptive strategies, the multi-stage battery thermal conditioning system provides efficient temperature management across a range of scenarios, optimizing battery performance while minimizing energy consumption.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A method for controlling traction battery conditioning, the method comprising:
providing a traction battery comprising a temperature control arrangement which includes a heat transfer fluid and a circulation arrangement for the heat transfer fluid;
determining whether the traction battery of a vehicle is at a predetermined target state of charge;
determining whether a battery energy control module has completed required post-drive routines for the traction battery;
determining a maximum energy budget for battery conditioning and a target temperature of the traction battery;
controlling a battery conditioning operation based on the maximum energy budget;
monitoring energy consumption of the battery conditioning operation and ceasing the battery conditioning operation when the maximum energy budget is reached;
determining a difference between the current temperature of the traction battery and the target temperature of the traction battery;
determining a control strategy for the temperature control arrangement, wherein the control strategy includes setting a temperature for the heat transfer fluid; and
executing the control strategy for the temperature control arrangement by controlling the temperature the flow of the heat transfer fluid by the circulation arrangement, such that the traction battery achieves the target temperature.

2. The method of claim 1, wherein the maximum energy budget is based upon the difference between the target temperature and an ambient temperature.

3. The method of claim 2, wherein the maximum energy budget is further based on the specific heat capacity of the traction battery.

4. The method of any preceding claim, wherein the conditioning of the traction battery is heating.

5. The method of any one of claims 1-4, wherein the conditioning of the traction battery is cooling.

6. The method of any preceding claim, wherein the circulation arrangement includes at least one pump.

7. The method of claim 6, wherein the circulation arrangement includes at least one actuator for controlling the at least one pump.

8. The method of any preceding claim, wherein the temperature control arrangement includes a feedback-based control arrangement.

9. The method of claim 8, wherein the feedback-based control arrangement is a proportional-integral-derivative controller.

10. The method of any preceding claim, wherein the heat transfer fluid comprises a liquid coolant.

11. The method of any preceding claim, further comprising:
determining an elapsed time for the execution of the control strategy for the temperature control arrangement;
determining whether a time threshold has been reached; and
on determining that the time threshold has been reached, ceasing the execution of the control strategy for the temperature control arrangement.

12. The method of any preceding claim, further comprising determining whether the vehicle is configured to be conditioned for a scheduled departure, and on determining that the vehicle is configured to be configured for a scheduled departure, ceasing the execution of the control strategy for the temperature control arrangement.

13. The method of any preceding claim, further comprising:
determining whether the vehicle is connected to an electric vehicle supply equipment, and on determining that the vehicle has been unplugged from the electric vehicle supply equipment, ceasing the execution of the control strategy for the temperature control arrangement.

14. A system for traction battery conditioning configured to carry out the method steps of any one of claims 1-13.

15. A vehicle comprising the system for traction battery conditioning of claim 14.
